# FASCICULE DE BREVET EUROPEEN

(11) **EP 1 506 139 B1**
(45) Date de publication et mention de la délivrance du brevet: **06.06.2007**
(21) Numéro de dépôt: 03752847.8
(22) Date de dépôt: 21.05.2003
(51) Int. Cl.: C03B 37/14, C03B 37/16, C03C 1/02

(54) **GRANULES DE FILS DE VERRE DE FORTE DENSITE**
GLASFASERGRANULAT MIT HOHER DICHTE
HIGH-DENSITY GLASS FIBRE GRANULES

(30) Priorité: 22.05.2002 FR 0206201
(43) Date de publication de la demande: 16.02.2005
(73) Titulaire: Saint-Gobain Vetrotex France S.A., 73000 Chambéry (FR)
(72) Inventeur: BLANCHARD, Jean-François, F-73800 Les Marches (FR); VIANA, Jean-Louis, F-73800 Cruet (FR); BASTARD, Michel, F-73100 Gresy sur Aix (FR); FONT, Dominique, F-73190 Saint Baldoph (FR)
(74) Mandataire: Jamet, Vincent
(86) Numéro de dépôt international: PCT/FR2003/001538
(87) Numéro de publication internationale: WO 2003/097543

(56) Documents cités:
- WO-A-00/62916
- WO-A-01/05722
- WO-A-02/04106
- WO-A-02/04107
- WO-A-96/40595
- WO-A-98/43920
- US-A- 3 110 572
- US-A- 3 743 464

## Description

L'invention concerne la préparation de granulés de fils de verre par brassage de fils de verre. Les fils de verre concernés sont utilisables pour le renforcement des matières thermoplastiques à base de polymère (plus communément appelés TPA, abréviation de « thermoplastique armé », ce qui se traduit en anglais par RTP, abréviation de « reinforced thermoplastics »). Les thermoplastiques concernés sont notamment les polyoléfines telles que le polyéthylène ou le polypropylène, les polyamides, le polybutylènetéréphatalate.

La fabrication de matériaux thermoplastiques renforcés par fils de verre coupés passe par le mélange et malaxage en extrudeuse d'un polymère thermoplastique et de fils de verre coupés. Cette préparation est réalisée à une température suffisante pour que le polymère soit suffisamment fluide et pour que la composition finale de thermoplastique renforcé soit la plus homogène possible. En effet, la présence d'agglomérats de fils dans le thermoplastique se traduit généralement par des propriétés mécaniques inférieures (notamment sur le plan de la résistance aux chocs) et/ou un aspect de surface dégradé.

D'une façon générale, l'extrudeuse joue les rôles suivants:
- elle filamentise (c'est-à-dire désagglomère) les agglomérats de fils de verre,
- elle réalise un mélange le plus homogène possible des fils de verre dans la matrice thermoplastique,
- elle chauffe le mélange fils de verre/thermoplastique à une température supérieure à celle de ramollissement du thermoplastique, puis produit un jonc de mélange fils de verre/thermoplastique, ledit jonc pouvant être découpé pour être transformé en granulés.

Le fil de verre coupé (« *chopped strand »* en anglais) se présente habituellement sous la forme d'un rassemblement d'une multitude de filaments individuels. Ces fils forment un ensemble intègre pouvant contenir par exemple de 10 à 4000 filaments. Les filaments peuvent avoir un diamètre allant de 5 à 24 µm, par exemple environ 10 µm ou environ 14 µm.

De façon à pouvoir manipuler les fils de verre plus facilement, on cherche à les agglomérer, par exemple sous la forme d'agglomérats comme des granulés ou des comprimés. En effet de tels agglomérats sont plus facile à manipuler et doser que des fils coupés traditionnels. De plus, ces agglomérats ont une densité vrac apparente supérieure et la même masse de fils de verre prend donc un volume inférieur ce qui est également avantageux sur le plan du stockage, du transport et de la manipulation. Cette densité mesurée par la méthode normalisée ISO 15100, doit être suffisante pour permettre des coûts de transport économiques et un dosage aisé et fiable en entrée d'extrudeuse. Le terme densité utilisé dans la présente demande est bien cette densité apparente déterminée par la norme ISO 15100.

Les agglomérats (granulés dans le cas de la présente invention) de fil de verre coupé doivent être suffisamment intègres pour ne pas se détériorer lors de leur mise en oeuvre. En effet, les différentes actions mécaniques (transport, déballage, convoyage, dosage) peuvent conduire à la création de *«fines»* qui rendent le fil coupé impropre à une utilisation correcte. D'un autre côté, cette intégrité ne doit pas non plus être trop forte car il faut que l'ouverture des agglomérats (c'est-à-dire leur délitement en filaments individuels) se fasse au bon moment et de façon complète lorsqu'ils sont mélangés aux granulés thermoplastiques dans l'extrudeuse.

Le US4840755 décrit un procédé de vibration pour densifier un peu les fils de départ et en faire des bâtonnets. La largeur d'arrivée des brins est sensiblement la même que celle de départ.

Le WO9640595 (de même famille que US5578535) concerne une composition comprenant des granulés obtenues par hydratation pour l'obtention d'une teneur en eau de 11 à 20 %, puis mélange des fibres pendant au moins trois minutes jusqu'à la formation de granulés, puis séchage desdits granulés. Le rapport des densités granulés/brins de départ est d'environ 1,2 à 1,3.

Le WO9843920 (de même famille que US5868982 et US5945134) concerne un procédé de fabrication de granulés comprenant les étapes successives suivantes : formation de fils (« strand ») comprenant une pluralité de filaments, coupe des fils, application d'une solution hydratante sur les fils, dispersion de la solution hydratante sur les fils par une première opération de culbutage dans une première zone d'un appareillage jusqu'à formation de granulés, densification des granulés en les soumettant à une deuxième opération de culbutage dans une seconde zone, le cas échéant du même appareillage. Les granulés ainsi réalisés sont cylindriques et ont un diamètre faisant 20 à 65 % de leur longueur. Selon ce document, l'augmentation de densité possible va de 13 à 60% par rapport aux brins de départ. De plus, plus l'augmentation de densité souhaitée est élevée, plus il est difficile de l'obtenir si l'on ne sépare pas les opérations d'agglomération (formation de granulés) d'une part et de densification d'autre part en les réalisant dans des appareils différents.

Le WO0149627 enseigne un procédé de fabrication de granulés comprenant les étapes successives suivantes : formation de fils comprenant une pluralité de filaments ensimés par un premier précurseur, coupe des fils, application d'une solution d'un liant comprenant un copolymère de l'anhydride maléïque et un autre monomère copolymérisable, dispersion de la solution sur les fils par une première opération de culbutage dans une première zone jusqu'à formation de granulés, densification des granulés en les soumettant à une deuxième opération de culbutage moins vigoureuse que la première dans seconde zone. Une augmentation de densité de 13 à 60 % par rapport aux fils coupés de départ est ainsi obtenue. C'est l'existence d'une deuxième opération de culbutage qui permet l'obtention des plus fortes densifications, jusqu'à 60% de plus par rapport aux fils coupés utilisés.

L'augmentation de la productivité oblige à considérer des méthodes de transport très sévères (par exemple le transport pneumatique), cette augmentation de productivité demande entre autre des propriétés de coulabilité très élevées pour garantir des vitesses d'alimentation importantes et un dosage extrêmement précis.

Habituellement, le fil coupé traditionnel a une longueur de 3 ou 4,5 mm, ces longueurs ayant été retenues en raison du bon compromis obtenu entre l'intégrité et la densité. La recherche de ce compromis a jusqu'à présent toujours interdit aux producteurs de fibres pour TPA de considérer des fils plus longs (par exemple 9 ou 12 mm), car alors le transport et le dosage de tels fils sont inadaptés aux extrudeuses habituelles. Pourtant cette augmentation de longueur aurait pour avantage d'accroître la longueur résiduelle dans le composite et par voie de conséquence les propriétés mécaniques du composite final. Compte tenu des développements d'extrudeuses aux profils de vis capables de conserver les longueurs les plus longues possibles, on peut donc envisager la préparation de granulés de fils de verre plus longs.

L'invention concerne un procédé de préparation de granulés de fils de verre par brassage de fils de verre coupés en présence de 10 à 25 % en poids d'eau, lesdits fils étant ensimés par un ensimage comprenant un organosilane, ledit procédé procurant un brassage pendant une durée suffisante pour que l'augmentation de la densité soit d'au moins 67%, et ce par un appareillage de brassage procurant à chaque-instant la-même fréquence de brassage aux fils ou granulés en formation qu'il contient, les granulés finalement formés contenant après séchage au moins 95%, voire au moins 99% en poids de verre, un agent collant (« film former » en anglais) étant en contact avec les fils de verre au plus tard pendant le brassage.

Dans les granulés obtenus grâce à l'invention, le rangement des *« filaments »* est plus intime que celui obtenu par la simple opération de fibrage sous la filière. Le facteur de forme des granulés conduit à une densité optimale.

Les fils de verre utilisés dans le cadre de l'invention sont généralement fabriqués selon la successions d'étapes suivantes :
- fibrage des filaments dans une atmosphère humide au travers de filières à partir de verre fondu, puis,
- ensimage des filaments par un liquide d'ensimage, puis,
- rassemblement des filaments en fils, puis,
- coupe des fils pour former des fils de verre coupés.

A ce stade, les fils coupés sont humides. Ils comprennent généralement de 5 à 25% en poids d'eau, par exemple 5 à 15% en poids d'eau. Il est inutile de les sécher avant de les introduire dans l'étape de brassage selon l'invention puisque cette étape doit de toute manière être réalisée en présence d'eau. Ainsi, on ajoute dans l'appareillage de brassage l'éventuel complément d'eau (par rapport à l'eau apportée par l'étape de fibrage) nécessaire à l'obtention d'une teneur totale en eau (eau due au fibrage dont eau d'ensimage + eau ajoutée dans l'appareil de brassage) allant de 10 à 25 % et de préférence de 12 à 15 % en poids de la masse introduite dans l'appareil de brassage. Il est possible et préférable de ne pas avoir à rajouter de complément d'eau (réduction de l'encrassement du granulateur et augmentation du rendement). Pour cela il suffit de fibrer à une humidité suffisante pour obtenir une granulation correcte.

Le liquide d'ensimage comprend au moins un organosilane. Cet organosilane comprend généralement au moins un groupement réactif capable de réagir avec les groupements hydroxyle de surface du verre de façon à greffer l'organosilane modifié (modifié en ce qu'il a réagi par son groupement réactif et a donc perdu une partie dudit groupement réactif) à la surface des filaments. L'organosilane utilisé lors de l'ensimage est généralement le dérivé hydrolysé d'un alkoxysilane, lui-même comprenant généralement le groupement trialkoxysilane, c'est-à-dire -Si(OR)₃, R représentant un radical hydrocarboné tel qu'un radical méthyle ou éthyle ou propyle ou butyle. L'organosilane peut donc par exemple être le dérivé hydrolysé de l'un des composés suivants :
- gamma-aminopropyltriéthoxysilane
- gamma-glycydoxypropyltriméthoxysilane.

L'organosilane est généralement présent dans la solution d'ensimage à raison de 0,05% à 1% en poids et de préférence de 0,2 à 0,6% en poids. La solution d'ensimage peut également comprendre d'autres ingrédients, comme un agent collant, un lubrifiant, un agent antistatique. Le liquide d'ensimage peut être une solution, une émulsion, une suspension.

A la suite de l'étape d'ensimage, les filaments sont rassemblés en fils comprenant généralement 10 à 4000 filaments, puis coupés à la longueur voulue. Ces deux étapes (rassemblement et coupe) sont connues en elles-même de l'homme du métier. On obtient ainsi des fils de verre coupés ensimés par un organosilane.
Généralement les fils coupés utilisés comprennent moins de 200 ppm en poids de fines (comprenant de 1 filament à 10 filaments agglomérés).

L'appareillage de brassage peut être tout type d'appareillage capable de brasser le mélange comprenant les fils coupés sans pour autant les détériorer. Le brassage ne doit pas être trop fort pour ne pas provoquer une désagglomération des fils dans les granulés en formation. Le brassage imprime un mouvement répétitif aux fils coupés, puis aux granulés en formation. La fréquence de rotation de l'appareillage peut par exemple aller de 10 à 50 tours par minute.

De préférence, le brassage est un culbutage, ce qui signifie que les fils ou granulés en formation sont soulevés pour retomber sur eux-mêmes en roulant, et ce jusqu'à l'obtention des granulés souhaités. Le granulé ne doit pas se désagréger en retombant. De préférence, le culbutage entraîne les fils ou granulés qu'il contient à une vitesse linéaire allant de 0,2 à 1 mètre par seconde et de préférence 0,3 à 0,7 mètre par seconde, notamment environ 0,5 mètres par seconde. Cette vitesse d'entraînement est celle de la paroi de l'appareil venant en contact avec les fils ou granulés en formation pour les entraîner. On peut représenter cette vitesse linéaire par un vecteur tangentiel à la paroi d'entraînement des fils ou granulés comme le vecteur v de la figure 2.

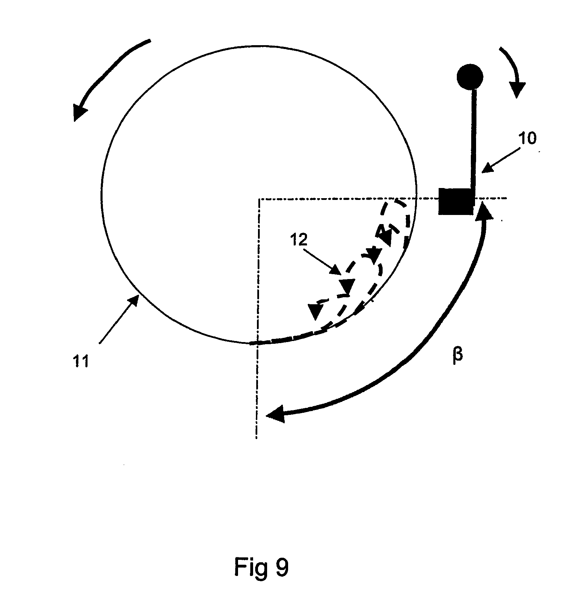

Le brassage selon l'invention peut être réalisé par une étape de brassage unique. Ceci signifie qu'il n'est pas nécessaire d'avoir recours à deux appareillages de brassage différents, par exemple pour le début du brassage d'une part et la fin du brassage d'autre part. Le brassage peut donc être réalisé dans un appareil unique. De plus, dans le cas d'un appareil de brassage unique, il n'est pas nécessaire de ménager différentes zones de brassage en modifiant par exemple la géométrie de l'appareil en différentes zones, les différentes zones soumettant les granulés en formation à des contraintes de brassage différentes. Des contraintes de brassage différentes seraient par exemple des culbutages plus ou moins vigoureux, c'est-à-dire présentant des fréquences différentes. L'appareil de brassage peut donc ne comporter qu'une zone unique de brassage. Du début à la fin du brassage, les fils coupés et les granulés formés où en formation peuvent être soumis aux mêmes contraintes de la part de l'appareil de brassage, notamment du fait par exemple que la fréquence de brassage est constante. Ainsi l'appareillage peut être tel qu'il procure un brassage, notamment un culbutage, dont la fréquence à chaque instant est identique pour tout ce qu'il contient, c'est-à-dire pour les fils coupés ou les granulés en cours de formation. Dans le cas d'un culbutage, la fréquence du culbutage est généralement supérieure à celle de la rotation de l'appareillage (nombre de tours par unité de temps). En effet, on voit en particulier sur la figure 9 que lorsque l'appareillage fait un tour, les objets à l'intérieur peuvent culbuter plusieurs fois sur eux-mêmes. On considère que l'appareillage entraîne tout ce qu'il contient avec la même fréquence car tous ces objets sont soumis aux mêmes contraintes de brassage. L'appareillage peut également être tel qu'il entraîne les fils ou granulés en formation avec une vitesse linéaire constante du début (au stade de fils coupés) à la fin de la préparation des granulés.

La préparation des granulés peut être réalisée en continu par un appareillage imprimant un brassage à la fréquence constante, du fil coupé de départ jusqu'au granulé final.

L'appareillage peut également contenir des cloisons canalisant les granulés en cours de formation pour limiter le mélange entre granulés au degré de formation faible avec des granulés au degré de formation fort.

L'appareillage de brassage, plus particulièrement de culbutage, tourne généralement autour d'un axe et brasse tout ce qu'il contient (des fils coupés aux granulés) avec la même fréquence. A chaque instant, l'appareillage n'a qu'une fréquence de rotation (ou vitesse radiale de rotation). Tout ce que contient l'appareillage est brassé à la même fréquence, cette fréquence étant en général supérieure à la fréquence de culbutage des objets à l'intérieur.

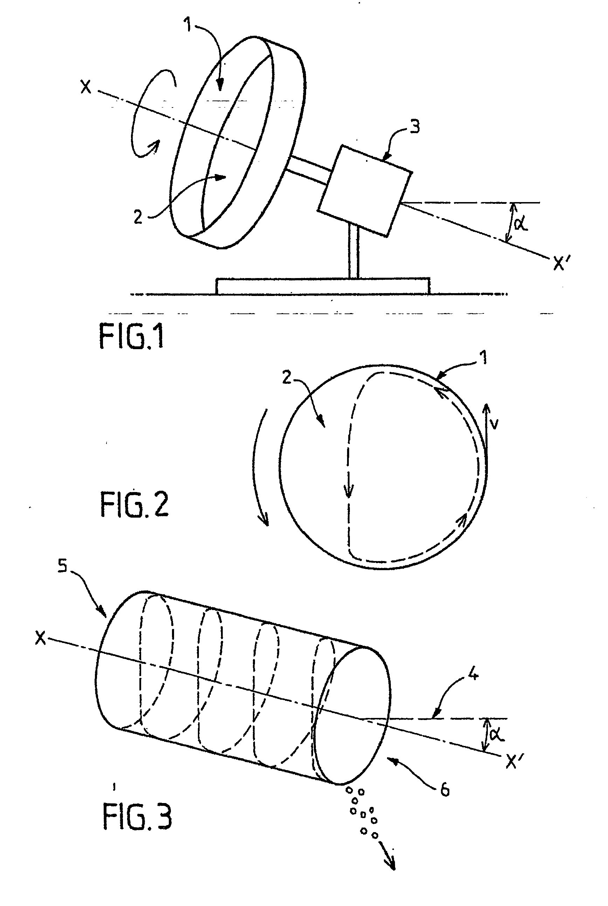

Une opération de culbutage peut par exemple être réalisée dans un cylindre creux tournant autour de son axe de révolution. La section du cylindre peut être cylindrique ou avoir une autre forme adaptée, par exemple polygonale comme hexagonale. L'axe de révolution forme de préférence avec l'horizontale un angle allant de 0 à 45°. On a représenté sur la figure 1 un tel cylindre. Ce cylindre comprend une surface tubulaire 1 et un fond 2. Dans la variante de la figure 1, le cylindre est peu profond (par rapport à son diamètre) et peut aussi être appelé plateau. Ce cylindre a son axe de révolution XX' formant un angle alpha avec l'horizontale. Ce cylindre peut être animé d'une rotation autour de son axe de révolution grâce à un moteur 3. Les fils coupés et les autres ingrédients du mélange sont destinés à être placés dans le cylindre. On observe que les fils sont culbutés et suivent une trajectoire du type de celle représentée sur la figure 2 par des pointillés fléchés, ladite figure représentant le cylindre vu selon la direction de son axe de révolution, ledit cylindre comprenant la surface tubulaire 1 et le fond 2. Selon cette variante, il est possible de faire varier ou de ne pas faire varier la fréquence de culbutage au cours du brassage. Cependant, même en cas de variation de la fréquence au cours du brassage, il est clair qu'à chaque instant, la fréquence de culbutage est identique pour tous les fils coupés et granulés contenus au même instant dans l'appareillage.

Il est possible d'assister le culbutage par la frappe d'un marteau sur l'appareil de culbutage en rotation (cylindre ou plateau). La figure 9 représente une telle variante. Le marteau 10 frappe périodiquement l'appareil en rotation 11, favorisant le décrochement des fils ou granulés en formation de la paroi interne de l'appareil. De préférence, les objets 12 contenus dans l'appareil culbutent dans la portion d'angle β d'environ 90° entre une verticale et une horizontale passant toutes deux par l'axe de rotation.

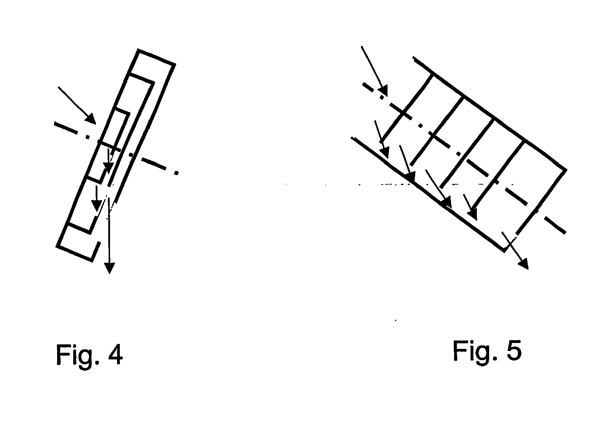

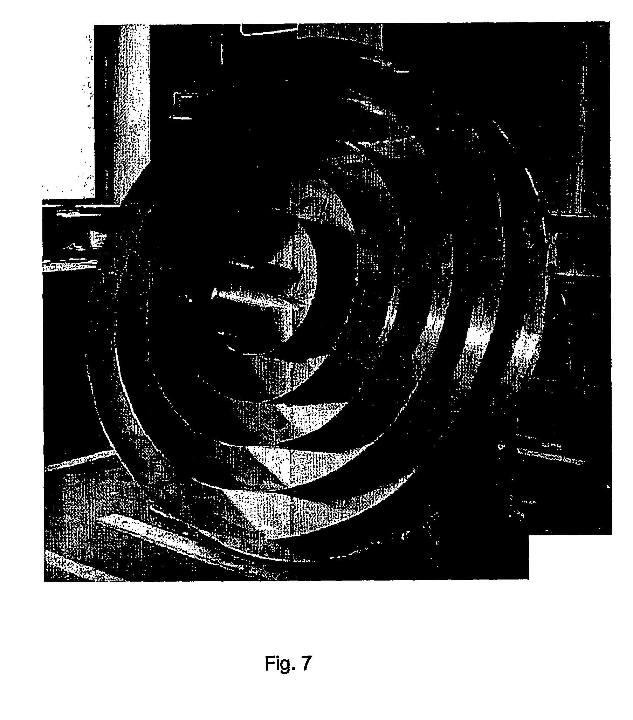

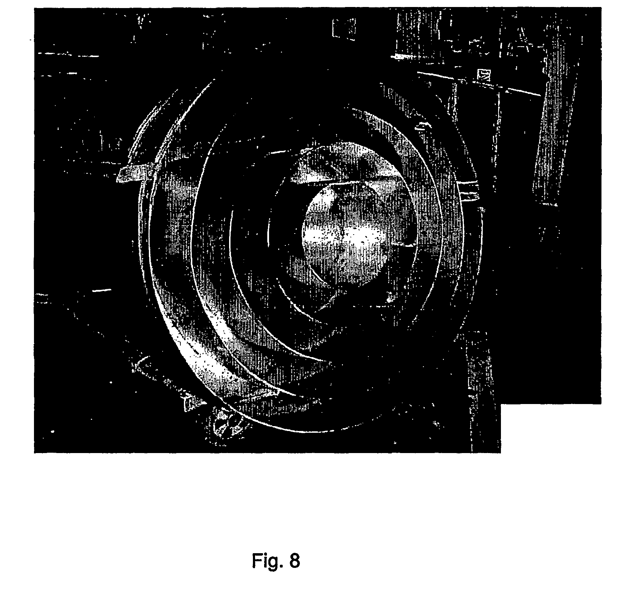

Pour un procédé industriel en continu, le cylindre peut être un assemblage de plusieurs sous-cylindres concentriques fixés les uns au-dessus des autres, les granulés passant de l'un à l'autre par l'intermédiaire d'orifices. Un tel assemblage est représenté sur la figure 4, le trajet des granulés étant représenté par des flèches. Dans cette variante, les granulés passent d'un sous-cylindre amont à un sous-cylindre aval après avoir passé un certain temps de séjour dans le sous-cylindre amont, et ainsi de suite. Une telle circulation, en produisant une meilleure séparation des granulés en fonction de leur densité, permet de resserrer la distribution granulométrique des granulés. De plus, la multiplication des pistes permet d'augmenter le temps de séjour et donc d'optimiser le volume du granulateur par rapport à la masse produite par unité de temps. L'appareillage contient donc ici des cloisons canalisant les granulés en cours de formation pour éviter le plus possible que des granulés au degré de formation faible ne se mélangent avec des granulés au degré de formation fort. Un tel appareillage procure une fréquence de culbutage (dépendant de la fréquence de rotation de l'appareillage) identique pour les fils coupés entrant et pour les granulés sortants. Même si tout ce que contient l'appareillage est culbuté avec la même fréquence, on note cependant que les objets culbutés sont ici distribués sur des rayons différents et que la vitesse circonférentielle change à chaque étage. Il faut donc que l'appareillage soit dimensionné et actionné de façon à ce que les objets dans les grands diamètres ne soient pas empêchés de culbuter du fait de la force centrifuge, et que les objets dans les petits diamètres tournent assez rapidement pour être culbutés. Cet appareillage procure donc un culbutage en tant que brassage, culbutage dont la fréquence à chaque instant est identique pour les fils coupés (à l'entrée) et les granulés, ce qui inclut les granulés en cours de formation et les granulés sortant. Selon cette variante utilisable pour une fabrication en continu, la fréquence de culbutage est généralement maintenue constante. Les figures 7 et 8 montrent des variantes de plateaux. La figure 7 montre un plateau spiralé, une cloison en spirale parallèle à l'axe de révolution du plateau étant solidaire de sa base. Les granulés en cours de formation suivent le trajet en spirale imposé par la cloison. Les granulés sont mis au milieu et ils ressortent en périphérie. La figure 8 montre un plateau comprenant une pluralité de cloisons concentriques parallèles à l'axe de rotation dudit plateau, des orifices dans les dites cloisons permettant aux granulés en cours de formation de passer d'un volume entre deux cloisons à un volume voisin. Ce passage d'un volume à l'autre se fait du centre vers la périphérie.

Ainsi, le brassage peut être réalisé dans un cylindre ayant la forme d'un plateau, au diamètre plus grand que sa profondeur, ledit plateau étant équipé de cloisons parallèles à l'axe de rotation et augmentant le temps de séjour des granulés. L'appareil de brassage reçoit les fils coupés au centre et les granulés ressortent par la périphérie du plateau.

Pour un procédé industriel en continu, on peut également utiliser un cylindre creux (un tube si la section du cylindre est circulaire) à l'axe de révolution incliné par rapport à l'horizontale et comprenant une surface tubulaire assez longue pour que les fils en cours de transformation en granulé se déplacent d'un bout à l'autre du cylindre. La section perpendiculaire à son axe de révolution peut être circulaire ou avoir toute autre forme adaptée, par exemple polygonale comme hexagonale. Ce cylindre peut avoir une légère conicité (5% par exemple), convergente ou divergente. On définit la conicité par le rapport en pourcentage (grand diamètre - petit diamètre) / longueur selon l'axe. Le principe d'un tel cylindre est représenté sur la figure 3. Le cylindre est incliné d'un angle alpha par rapport à l'horizontale 4 Les fils coupés sont chargés à l'intérieur du cylindre à travers l'une de ses ouvertures 5, celle en position élevée par rapport à l'autre ouverture, les fils en cours de transformation en granulés suivant alors une trajectoire du type de celle représentée en pointillé sur la figure 3, les granulés formés étant récupérés par l'ouverture de sortie 6, celle en position basse par rapport à l'ouverture d'entrée 5. On considère qu'un tel appareillage n'a qu'une seule zone de brassage car du début à la fin du brassage, les fils coupés puis les granulés en formation sont soumis aux mêmes contraintes de brassage de la part de l'appareillage. Le cylindre peut aussi être un assemblage de plusieurs sous-cylindres concentriques fixés les uns au-dessus des autres, les granulés passant de l'un à l'autre par l'intermédiaire d'orifices. Un tel assemblage est représenté sur la figure 5, le trajet des granulés étant représenté par des flêches. Dans cette variante, les granulés passent d'un sous-cylindre amont à un sous-cylindre aval après avoir passé un certain temps de séjour dans le sous-cylindre amont, et ainsi de suite. Une telle circulation, en produisant une meilleure séparation des granulés en fonction de leur densité, permet de resserrer la distribution granulométrique des granulés. L'appareillage contient donc ici des cloisons canalisant les granulés en cours de formation pour éviter le plus possible que des granulés au degré de formation faible ne se mélangent avec des granulés au degré de formation fort. Ici également, l'appareillage procure un culbutage en tant que brassage, culbutage dont la fréquence à chaque instant est identique pour les fils coupés (à l'entrée) et les granulés, ce qui inclut les granulés en cours de formation et les granulés sortant. Ici également, la fréquence de culbutage est généralement maintenue constante et cet appareillage peut aussi être utilisé pour une fabrication en continu. Les appareillages des figures 3 et 5 sont des exemples pour lesquels la vitesse linéaire d'entrainement des fils et granulés peut être constante pendant toute la transformation des fils en granulés.

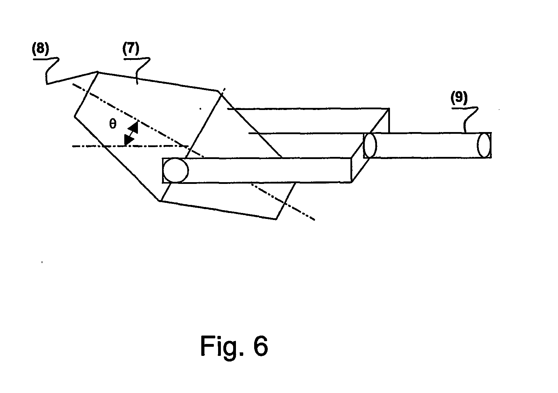

Le brassage peut également être réalisé dans un bicône tournant tel que celui représenté sur la figure 6. Ce bicône (7) muni d'une ouverture (8) mis en rotation par l'intermédiaire d'un axe (9). L'axe du bi-cône pouvant prendre une inclinaison θ variable suivant l'opération considérée : Chargement en fils coupés θ=45°, ajout d'eau θ=0°, déchargement en fin de granulation θ=90°. A titre d'exemple, ce bicône peut fonctionner avec une fréquence de rotation autour de l'axe 9 de 30 révolutions par minute.

On peut également utiliser un plateau de granulation , un cylindre incliné ouvert aux 2 extrémités, un cylindre fixe où les fibres sont mises en mouvement par l'effet d'un vortex.

Avant l'opération de brassage, on introduit dans l'appareillage de brassage les ingrédients du mélange destiné à être brassé. On introduit donc
- les fils ensimés coupés, et
- au moins un agent collant, et
- de l'eau à raison de 10 à 25 % en poids de la masse totale dudit mélange.

Les fils ensimés coupés sont généralement humides et portent donc déjà une partie des 10 à 25% d'eau nécessaire au procédé selon l'invention.

L'agent collant et l'eau sont en contact avec les fils de verre au plus tard pendant le brassage. Ceci signifie que l'agent collant peut être mis en contact avec les fils de verre dès le fibrage, par exemple lors de l'ensimage en l'introduisant dans le liquide d'ensimage, ou il peut être mis en contact avec les fils de verre plus tard, indépendamment de l'étape d'ensimage, par introduction séparée dans l'appareil de brassage, et ce, généralement avant brassage, ou éventuellement pendant le brassage.

L'agent collant peut être introduit au moins partiellement séparément des fils coupés. Cependant, l'agent collant peut également être introduit au moins partiellement en même temps que les fils du fait qu'il est porté par les fils. C'est notamment le cas si le liquide d'ensimage comprenait de l'agent collant. La totalité de l'agent collant nécessaire à l'opération de brassage peut être porté par les fils, suite à son application sur les fils lors de l'opération d'ensimage. Dans ce cas, aucune quantité supplémentaire d'agent collant n'est ajouté sur les fibres après l'étape d'ensimage.

L'agent collant peut être présent à raison de 0,3% à 2% en poids de la masse totale à brasser. L'agent collant a pour fonction de donner une cohésion au fil coupé (il retient les filaments ensemble au sein du fil coupé). Cependant, l'agent collant ne doit pas empêcher que les filaments ne se séparent les uns des autres lors du passage en extrudeuse. L'homme du métier connait les agents collants utilisables.

L'agent collant peut ainsi être choisi parmi les composés suivants :
- polyester,
- polyuréthane,
- polymère époxy, par exemple polymère du di-glycidyléther de bis-phénol A,
- copolymère époxy-polyuréthane.

Notamment, on peut utiliser le Neoxil 962 de DSM.

Comme le sait l'homme du métier, l'agent collant est à choisir en fonction de la nature du thermoplastique à renforcer. Pour un thermoplastique de type polyester comme le PBT ou le PET, on peut utiliser un agent collant de type époxy, en particulier un polymère du diglycidyléther de bisphénol A (DGEBA). Pour un thermoplastique de type polyamide, on peut utiliser un agent collant de type polyuréthane.

L'eau peut être introduite dans l'appareil de brassage au moins partiellement séparément des fils coupés. Cependant, l'eau est généralement également introduite au moins partiellement en même temps-que-les fils du fait qu'elle est portée par les fils, suite à l'opération d'ensimage. En effet, les fils coupés ne sont généralement pas séchés avant l'étape de brassage. La totalité de l'eau nécessaire à l'opération de brassage peut également être portée par les fils, suite à son application sur les fils notamment lors de l'opération d'ensimage.

Si la totalité de l'eau nécessaire au procédé selon l'invention n'est pas portée par les fils au moment de leur introduction dans l'appareillage, cette eau peut être apportée directement dans l'appareillage de brassage par tout moyen adapté et notamment par pulvérisation / atomisation ou par apport de vapeur. L'apport de vapeur est un moyen préféré d'apport d'eau, pour le cas ou de l'eau doit être ajoutée directement (sans être porté par les fils) dans l'appareillage de brassage. En effet, on a constaté que l'usage de vapeur se traduisait par une meilleure homogénéité des granulés obtenus et par une plus grande vitesse de formation des granulés.

Si de l'eau doit être apportée dans l'appareil de brassage indépendamment des fils coupés, il est possible de la mélanger avant introduction dans l'appareillage de brassage avec un autre ingrédient, par exemple au moins une partie de l'agent collant. Ceci présente un avantage pour le cas ou l'on ne souhaite pas appliquer l'agent collant sur les fils lors de l'étape d'ensimage, par exemple pour des raisons de toxicité incompatible avec l'opération de fibrage/ensimage, ou encore si l'agent collant est réactif avec un autre ingrédient de la composition d'ensimage ou est nuisible à la stabilité de l'émulsion d'ensimage.

L'ensimage peut donc apporter en surface des fils une partie ou la totalité de la quantité d'agent collant et de l'eau totale nécessaire. Typiquement, selon un mode de réalisation préféré, la totalité de la quantité de l'agent collant nécessaire est introduite dans le liquide d'ensimage des fils et il n'est plus nécessaire d'en ajouter après l'ensimage. Ceci est avantageux du fait que l'ensemble du procédé est simplifié, et du fait que si l'on doit ajouter un agent collant dans une étape postérieure à l'ensimage lui-même, par exemple par pulvérisation, on prend les risques inhérents à la manipulation de ce genre de produit, par exemple le bouchage des buses de pulvérisation. De plus, si, dans une telle étape postérieure à l'ensimage, on souhaite ajouter une partie de l'eau nécessaire en mélange avec cet agent collant, il ne serait pas possible d'utiliser la vapeur pour cet ajout.

L'ensimage apporte forcément au moins une partie de l'eau nécessaire, voire la totalité. Généralement, on ajoute également de l'eau directement dans l'appareil de brassage, de façon indépendante des fils. Les fils portant généralement de l'eau à raison de 5 à 15% en poids de la masse totale à brasser, on ajoute généralement directement de l'eau dans l'appareillage de brassage à raison de 5 à 10% en poids de la masse totale à brasser, de façon à ce que la masse totale brassée soit constituée d'eau pour 10 à 25% et de préférence 12 à 15 % de son poids. Il s'agit là notamment d'eau pure, c'est-à-dire contenant au moins 99% d'eau.

Ainsi, selon une variante préférée du procédé, on apporte par l'ensimage la totalité de l'agent collant et au moins une partie de l'eau, et l'on ajoute simplement directement dans l'appareil de brassage un complément d'eau selon les proportions qui viennent d'être données. L'ensimage est donc généralement « complet », ce qui signifie qu'il incorpore tous les ingrédients d'un ensimage classique compte tenu de l'application envisagée, et qu'il n'est généralement plus nécessaire d'ajouter l'un de ces ingrédients après l'ensimage, sauf éventuellement de l'eau.

Le temps de séjour des fils dans l'appareil de brassage pour l'obtention des granulés est généralement d'au moins 2 min, et plus généralement d'au moins 4 min, et plus généralement d'au moins 8 min, par exemple 10 min. Il est possible de réaliser le brassage pendant une durée plus longue, mais cela n'est pas nécessaire. Ainsi le brassage peut être réalisé en une durée inférieure à 15 min. Le brassage est réalisé pendant une durée suffisante à l'obtention de la densité des granulés souhaitée.

Le brassage est généralement réalisé à température ambiante.

De préférence, la surface interne de l'appareillage de brassage est hydrophobe. De préférence, la surface interne de l'appareillage de brassage est résistante à l'abrasion. De préférence, la surface interne de l'appareillage de brassage est suffisamment glissante vis-à-vis des fils de verre en mouvement. De telle propriétés peuvent être apportées par un revêtement. Ce revêtement peut être en un polymère hydrophobe tel que le PTFE, le PVDF. On a observé que les fils en mouvement avaient moins tendance à se coller aux parois si l'appareillage comportait une surface interne en de telles matières, ce qui se traduit par de meilleurs rendements. De préférence, la surface interne à une rugosité adaptée, présentant par exemple un Ra de 1,5.

Les fils coupés s'agglomèrent en se juxtaposant lors du brassage pour former les granulés, sans modification de leur longueur. Ainsi, les granulés se présentent sensiblement sous la forme de cylindres de longueur sensiblement identique à celle des plus longs fils introduits au départ.

On peut utiliser des fils coupés ayant une longueur allant de 1,5 à 25 mm, notamment 2 à 25 mm comme 2 à 15 mm, et plus particulièrement 3 mm, 4,5 mm, 5 mm, 9 mm ou 12 mm.

On peut également utiliser comme fils un mélange de fils aux longueurs différentes.

Les fils coupés de départ peuvent également comprendre des fines, puisque ces fines participent bien à la granulation en s'agglomérant pour s'insérer dans les granulés.

Les filaments contenus dans les fils peuvent avoir un diamètre allant de 5 à 24 µm.

Le brassage est réalisé pendant la durée suffisante à l'obtention du diamètre de granulé souhaité ou de l'augmentation de densité souhaitée. Le procédé selon l'invention permet la préparation de granulés dont la densité est supérieure d'au moins 35 %, voire d'au moins 50 %, voire d'au moins 67 %, voire d'au moins 80 %, voire d'au moins 100%, voire d'au moins 130 %, voire d'au moins 200% de la densité des fils coupés de départ .En général, un maximum de densité est obtenu lorsque le diamètre de granulé atteint une valeur sensiblement identique à sa longueur.

Le procédé selon l'invention permet l'obtention de granulés présentant une faible perte au feu (« LOI » en anglais de « loss on ignition »). Ceci tient au fait qu'il est possible d'utiliser dans le cadre de la présente invention de faibles quantités de composés organiques tels que l'organosilane ou l'agent collant. Ainsi, le granulé selon l'invention peut avoir une perte au feu inférieure à 0,8% et même inférieure à 0,5% , par exemple allant de 0,1 à 0,5%, notamment allant de 0,2 à 0,4%.

Le granulé final peut se définir comme un objet constitué par le contact intime d'une multitude de filaments de verre parallèles de diamètre unitaire pouvant aller de 5 à 24 µm, ces filaments ayant tous le même diamètre nominal ou ayant des diamètres nominaux différents. Le nombre de filaments contenu dans un granulé peut notamment aller de 50 000 à 500 000 selon le diamètre des filaments, par exemple 360 000 à 500 000. L'empilement des filaments dans les granulés est compact. Le tableau 2 ci-dessous donne des exemples de granulés que l'on peut obtenir par le procédé selon l'invention :

**Tableau 2**

| **diamètre filaments** (µm) | **Nombre de filaments** | **Diamètre du granulé final (mm)** |
|---|---|---|
| 5 | 5000 | 0,4 |
| 5 | 500000 | 3,5 |
| 24 | 50000 | 5,4 |
| 24 | 500000 | 17,0 |
| 5 | 5000 | 0,4 |
| 5 | 50000 | 1,1 |
| 5 | 200000 | 2,2 |
| 10 | 5000 | 0,7 |
| 10 | 50000 | 2,2 |
| 10 | 200000 | 4,5 |
| 24 | 5000 | 1,7 |
| 24 | 50000 | 5,4 |
| 24 | 200000 | 10,7 |

Le granulé se présente généralement sous une forme sensiblement cylindrique, de diamètre approximatif pouvant être compris entre 1 et 10 mm. Pour quelques très gros granulés parmi les autres, à la loupe, ils peuvent éventuellement apparaître comme constitués de deux ou trois cylindres fortement associés. Pour les granulés aux longueurs d'au moins 9 mm et plus, le cylindre peut dans certains cas être un peu déformé, les filaments n'étant pas en contact sur toute leur longueur mais ayant subi un glissement selon leur axe, ce qui fait que les granulés ont alors une longueur sensiblement supérieure à celle des fils coupés de départ. Pour une longueur de fils coupés de base (utilisés au départ) de 12 mm, les granulés peuvent ainsi s'allonger en forme de pointe jusqu'à 16 mm. Ces granulés contiennent donc un corps central sensiblement cylindrique, chaque base de cylindre se prolongeant par une pointe, comme pour une olive. Ainsi, pour les granulés aux longueurs d'au moins 9 mm, leur longueur peut être supérieure d'au moins 10 % de celle des fils coupés de départ et donc des filaments qu'ils contiennent.

Les granulés ont généralement une densité vrac d'au moins 67% supérieure à la densité vrac des fils coupés de départ. Ils ont généralement sensiblement la même longueur que lesdits fils coupés de départ, surtout lorsque la longueur desdits granulés est inférieure à 9 mm.

Les granulés comprennent un ensimage approprié pour le renforcement des matières thermoplastiques, ledit ensimage ayant généralement été appliqué au niveau des fils avant leur coupe en fils coupés.

Il est inutile de constituer une gaine de polymère autour des granulés pour les encapsuler. En effet, les granulés réalisés selon l'invention sont suffisamment intègres pour être utilisés tels quels après séchage. Ils peuvent donc être utilisés tels quels (séchés) pour alimenter une extrudeuse (ou tout autre mélangeur adapté) par ailleurs également alimenté en matière thermoplastique (par exemple PE, PP, PS), généralement également sous la forme de granulés. Le fait qu'ils ne soient pas encapsulés fait qu'ils se délitent plus facilement lors de leur utilisation pour la constitution du mélange avec le thermoplastique.

### Exemples de granulation discontinue

On introduit dans le bicône de la figure 6, lequel a un volume interne de 11,5 litres, 2000 g de fils coupés de densité « dens » (voir tableau 1). Ces fils comprenant environ de 800 à 4000 filaments de 10 µm ont été ensimés au fibrage à l'aide d'un rouleau applicateur conventionnel par un liquide d'ensimage comprenant un organosilane, le dérivé hydrolysé du gamma-aminopropyltriéthoxysilane commercialisé sous la référence A1100 de Crompton-OSI et un agent collant du type polymère du di-glycidyléther de bis-phénol A. Ces fils comprennent x% en poids d'eau (voir tableau 1). Leur perte au feu est de y% en poids. On introduit ensuite la quantité d'eau nécessaire à l'obtention du taux d'humidité souhaité (voir tableau 1) soit sous forme de vapeur («V» dans le tableau 1), soit par pulvérisation (« P » dans le tableau 1). Après fermeture du couvercle, on met le bicône en position θ =45° et le dispositif se met en rotation continue à la vitesse de 30 révolutions par minute pendant 10 min.
Les principales caractéristiques de ces exemples sont données par le tableau 1 (conditions de réalisation et résultats). Dans ce tableau, on donne :
- les caractéristiques des fils coupés de départ, à savoir :
   - leur longueur « L » en mm
   - leur densité « Dens » mesurée par la méthode ISO 15100,
   - leur teneur en eau « x » en % en poids,
   - leur perte au feu « y » en % en poids;
- la manière d'ajouter de l'eau, à savoir :
   - le moyen : vapeur « V » ou pulvérisation « P »,
   - la quantité d'eau ajoutée en % en poids de la masse totale à brasser,
- la teneur en eau totale lors du brassage,
- les caractéristiques du granulé final, à savoir :
   - leur longueur « L » en mm,
   - leur densité « Dens » mesurée par la méthode ISO 15100;
- l'augmentation de densité entre la densité des fils coupés de départ et les granulés.

### Exemple de granulation continue

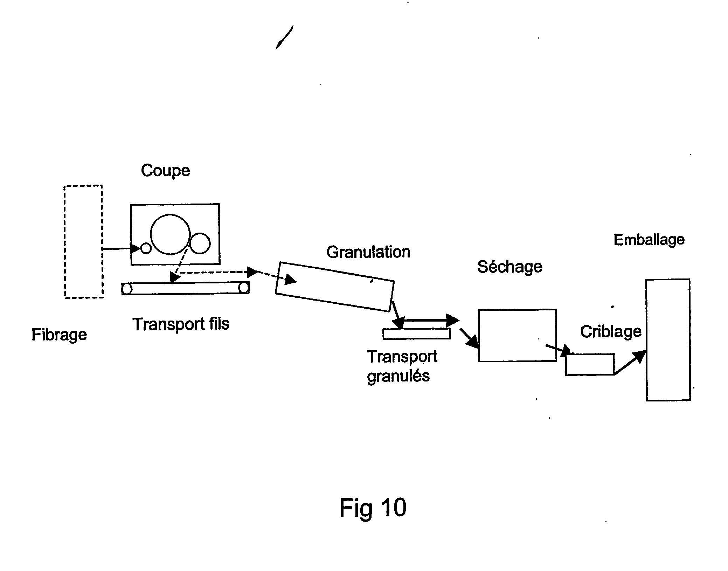

On réalise des granulés par le dispositif représenté en figure 10. Après fibrage au cours de laquelle les fibres sont ensimées, on procède à la coupe des fils, les fils coupés étant transportés ensuite jusqu'à l'appareillage de granulation sous forme de tube, les granulés étant ensuite transportés jusqu'au séchage puis au criblage, puis les granulés sont emballés.
Les conditions de fabrication étaient les suivantes :

| | |
|---|---|
| fibrage: | Filière 1200 trous |
| | Tirée 650 kg / jour |
| | diamètre filament : 10 µm |
| fils coupés : | Longueur de coupe :4.5 mm |
| | Perte au feu :0.69 % |
| | Humidité à la coupe :14.5% |
| Granulation : | |
| | Tube de granulation de longueur 3,30 m |
| | ∅ du tube de granulation : 240 mm |
| | Pente du tube 1,9 ° |
| | Vitesse de rotation 40 tours/min |
| | Système d'aide au culbutage (marteau) 2 coups / tour |
| | Temps de séjour : 2 min |
| Séchage: | |
| | Lit fluidisé vibré à 180°C |
| | temps de séjour 2 min |

Les fils coupés sont introduits à l'intérieur du tube en mouvement directement à la bonne humidité de granulation. Le tableau 3 rassemble les résultats :

**Tableau 3**

| Ø Filaments (µm) | Longueur filaments | Humidité (%poids) | Densité | Perte au feu | Augmentation de densité par la granulation | Diamètre Moyen des granulés (mm) | Nombre de filaments Par granulé |
|---|---|---|---|---|---|---|---|
| 10 | 4.5 | 14,54 | 0,87 | 0,69 | 61% | 2.6 | 70000 |
| 10 | 4.5 | 12,82 | 0,95 | 0,60 | 60% | 2.8 | 80000 |
| 10 | 4.5 | 12,5 | 0,8 | 0,66 | 62% | 3.2 | 100000 |
| 10 | 4.5 | 13 | 0,93 | 0,58 | 70% | 4.5 | 200000 |
| 17 | 12 | 13 | 0,71 | 0,81 | 200% | 2.3 | 17000 |

**Tableau 1**

| | **Fils coupés** | | | | **Eau ajoutée** | | **Eau Totale** | **Granulé** | | **Augmentation de densité** |
|---|---|---|---|---|---|---|---|---|---|---|
| **Ex n°** | **L (mm)** | **Dens** | **x (%)** | **y (%)** | **moyen** | **%** | **(% poids)** | **L (mm)** | **Dens** | **%** |
| 1 | 4,5 | 0,53 | 10 | 0,7 | V | 1 | 11 | 4,5 | 0,8 | 51 |
| 2 | 4,5 | 0,53 | 10 | 0,7 | V | 2 | 12 | 4,5 | 0,9 | 70 |
| 3 | 4,5 | 0,53 | 10 | 0,7 | V | 3 | 13 | 4,5 | 1 | 89 |
| 4 | 4,5 | 0,53 | 10 | 0,7 | V | 4 | 14 | 4,5 | 0,95 | 80 |
| 5 | 4,5 | 0,53 | 10 | 0,7 | V | 8 | 18 | 4,5 | 0,75 | 41 |
| 6 | 3 | 0,53 | 5 | 0,7 | V | 7 | 12 | 3 | 0,85 | 66 |
| 7 | 4,5 | 0,53 | 5 | 0,7 | V | 7 | 12 | 4,5 | 0,9 | 70 |
| 8 | 6 | 0,3 | 5 | 0,7 | V | 7 | 12 | 6 | 0,85 | 183 |
| 9 | 12 | 0,2 | 5 | 0,7 | V | 7 | 12 | 12 | 0,85 | 330 |
| 10 | 6 | 0,3 | 10 | 0,7 | V | 4 | 14 | 6 | 0,8 | 166 |
| 11 | 12 | 0,2 | 10 | 0,7 | V | 4 | 14 | 12 | 0,8 | 300 |
| 12 | 9 | 0,25 | 10 | 0,7 | P | 2 | 12 | 9 | 0,9 | 260 |
| 13 | 9 | 0,25 | 10 | 0,7 | P | 4 | 14 | 9 | 0,85 | 240 |
| 14 | 4,5 | 0,43 | 5 | 0,4 | P | 8 | 13 | 4,5 | 0,9 | 110 |
| 15 | 4,5 | 0,43 | 5 | 0,4 | V | 8 | 13 | 4,5 | 0,9 | 110 |
| 16 | 9 | 0,25 | 5 | 0,4 | P | 8 | 13 | 9 | 0,9 | 260 |
| 17 | 9 | 0,25 | 5 | 0,4 | V | 8 | 13 | 9 | 0,88 | 250 |

## Revendications

1. Procédé de préparation de granulés de fils de verre par brassage de fils de verre coupés ensimés, lesdits fils comprenant des filaments de verre contigus, en présence de 10 à 25% en poids d'eau, lesdits fils ayant été ensimés par un ensimage comprenant un organosilane, ledit procédé procurant un brassage pendant une durée suffisante pour que l'augmentation de la densité soit d'au moins 67%, et ce par un appareillage de brassage unique procurant à chaque instant la même fréquence de brassage aux fils ou granulés en formation qu'il contient, les granulés finalement formés contenant après séchage au moins 95% en poids de verre, un agent collant étant en contact avec les fils de verre au plus tard pendant le brassage.

2. Procédé selon la revendication précédente **caractérisé en ce que** le brassage est un culbutage.

3. Procédé selon la revendication précédente **caractérisé en ce que** l'appareillage entraîne les fils ou granulés en formation qu'il contient à une vitesse linéaire allant de 0,2 à 1 mètre par seconde.

4. Procédé selon la revendication précédente **caractérisé en ce que** l'appareillage entraîne les fils ou granulés en formation qu'il contient à une vitesse linéaire allant de 0,3 à 0,7 mètre par seconde.

5. Procédé selon la revendication précédente **caractérisé en ce que** l'appareillage entraîne les fils ou granulés en formation qu'il contient à une vitesse linéaire d'environ 0,5 mètre par seconde.

6. Procédé selon l'une des revendications 2 à 5, **caractérisé en ce que** le culbutage est assisté par la frappe d'un marteau sur l'appareil de culbutage.

7. Procédé selon l'une des revendications précédentes **caractérisé en ce que** la totalité de l'agent collant a été appliquée sur les fils lors de leur ensimage.

8. Procédé selon l'une des revendications précédentes **caractérisé en ce que** l'agent collant est présent à raison de 0,3% à 2% en poids de la masse totale à brasser.

9. Procédé selon l'une des revendications précédentes, **caractérisé en ce que** l'eau est entièrement introduite portée par les fils coupés.

10. Procédé selon l'une des revendications 1 à 8, **caractérisé en ce que** l'eau est introduite dans l'appareillage de brassage pour partie portée par les fils, pour partie directement dans l'appareillage indépendamment des fils,

11. Procédé selon la revendication précédente, **caractérisé en ce que** l'eau portée par les fils représente 5 à 15% en poids de la masse à brasser et l'eau ajoutée directement dans l'appareillage représente 5 à 10% en poids de la masse à brasser.

12. Procédé selon l'une des deux revendications précédentes **caractérisé en ce que** l'eau ajoutée directement l'est sous forme pulvérisée ou atomisée.

13. Procédé selon l'une des revendications précédentes, **caractérisé en ce que** les fils ont une longueur allant de 1,5 à 15 mm.

14. Procédé selon l'une des revendications précédentes, **caractérisé en ce que** les fils coupés comprennent moins de 200 ppm en poids de fines comprenant 1 à 10 filaments.

15. Procédé selon l'une des revendications précédentes, **caractérisé en ce que** le brassage est réalisé un temps suffisant pour l'obtention d'une augmentation de densité d'au moins 80%.

16. Procédé selon la revendication précédente, **caractérisé en ce que** le brassage est réalisé un temps suffisant pour l'obtention d'une augmentation de densité d'au moins 100%.

17. Procédé selon la revendication précédente, **caractérisé en ce que** le brassage est réalisé un temps suffisant pour l'obtention d'une augmentation de densité d'au moins 130%.

18. Procédé selon la revendication précédente, **caractérisé en ce que** le brassage est réalisé un temps suffisant pour l'obtention d'une augmentation de densité d'au moins 200%.

19. Procédé selon l'une des revendications précédentes, **caractérisé en ce que** les granulés ont une perte au feu inférieure à 0,5%.

20. Procédé selon l'une des revendications précédentes, **caractérisé en ce que** la surface interne de l'appareillage de brassage est recouverte d'un revêtement en polymère hydrophobe.

21. Procédé selon l'une des revendications précédentes **caractérisé en ce que** la préparation est réalisée en continu, le brassage étant réalisé avec une fréquence constante, du fil coupé de départ jusqu'au granulé final.

22. Procédé selon l'une des revendications précédentes **caractérisé en ce que** le brassage est réalisé dans un cylindre ayant la forme d'un plateau, au diamètre plus grand que sa profondeur, ledit plateau étant équipé de cloisons parallèles à l'axe de rotation et augmentant le temps de séjour des granulés.

23. Procédé selon la revendication précédente, **caractérisé en ce que** l'appareil de brassage reçoit les fils coupés au centre et **en ce que** les granulés ressortent par la périphérie du plateau.

24. Procédé selon l'une des revendications 1 à 21 **caractérisé en ce que** l'appareillage ne comprend qu'une seule zone de brassage.

25. Granulé de diamètre compris entre 1 et 10 mm, comprenant en contact intime 50 000 à 500 000 filaments de verre parallèles de diamètre unitaire allant de 5 à 24 µm.

26. Granulé selon la revendication précédente comprenant 360 000 à 500 000 filaments de verre.

27. Utilisation de granulés selon l'une des revendications 25 ou 26 pour renforcer un thermoplastique.

28. Utilisation selon la revendication précédente **caractérisée en ce que** le granulé n'est pas encapsulé dans un polymère.

## Claims

1. A method for preparing glass strand pellets by stirring sized chopped glass strands, said strands containing contiguous glass filaments, in the presence of 10 to 25 wt% of water, said strands having been coated with a size containing an organosilane, said method performing stirring for long enough for the increase in density to be at least 67%, this being using a single stirring equipment that, at each instant impart to the strands or forming pellets it contains, the same stirring frequency, the pellets finally formed containing, after drying, at least 95 wt% glass, a film-forming agent being in contact with the glass strands during stirring at the latest.

2. The method as claimed in the preceding claim, **characterized in that** the stirring is a tumbling operation.

3. The method as claimed in the preceding claim, **characterized in that** the equipment drives the strands or forming pellets it contains at a linear speed ranging from 0.2 to 1 meter per second.

4. The method as claimed in the preceding claim, **characterized in that** the equipment drives the strands or forming pellets it contains at a linear speed ranging from 0.3 to 0.7 meter per second.

5. The method as claimed in the preceding claim, **characterized in that** the equipment drives the strands or forming pellets it contains at a linear speed of about 0.5 meter per second.

6. The method as claimed in one of the claims 2 to 5, **characterized in that** the tumbling is assisted by the striking of a hammer on the tumbling apparatus.

7. The method as claimed in one of the preceding claims, **characterized in that** all of the film-forming agent is applied to the strands while they are being sized.

8. The method as claimed in one of the preceding claims, **characterized in that** the film-forming agent is present in an amount representing 0.3 wt% to 2 wt% of the total mass to be stirred.

9. The method as claimed in one of the preceding claims, **characterized in that** the water is wholly introduced contributed by the chopped strands.

10. The method as claimed in one of claims 1 to 8, **characterized in that**-the water is introduced into the stirring equipment partly as a contribution from the strands, and partly introduced directly into the equipment independently of the strands.

11. The method as claimed in the preceding claim, **characterized in that** the water contributed by the strands represents 5 to 15 wt% of the mass to be stirred and the water added directly into the equipment represents 5 to 10 wt% of the mass to be stirred.

12. The method as claimed in one of the two preceding claims, **characterized in that** the water added directly is added in sprayed or atomized form.

13. The method as claimed in one of the preceding claims, **characterized in that** the strands have a length ranging from 1.5 to 15 mm.

14. The method as claimed in one of the preceding claims, **characterized in that** the chopped strands contain less than 220 ppm (in terms of weight) of fines comprising 1 to 10 filaments.

15. The method as claimed in one of the preceding claims, **characterized in that** the stirring is performed for long enough to obtain an increase in density of at least 80%.

16. The method as claimed in the preceding claim, **characterized in that** the stirring is performed for long enough to obtain an increase in density of at least 100%.

17. The method as claimed in the preceding claim, **characterized in that** the stirring is performed for long enough to obtain an increase in density of at least 130%.

18. The method as claimed in the preceding claim, **characterized in that** the stirring is performed for long enough to obtain an increase in density of at least 200%.

19. The method as claimed in one of the preceding claims, **characterized in that** the granules have a loss on ignition of less than 0.5%.

20. The method as claimed in one of the preceding claims, **characterized in that** the interior surface of the stirring equipment is covered with a coating made of hydrophobic polymer.

21. The method as claimed in one of the preceding claims, **characterized in that** the preparation is performed continuously, stirring being performed at a constant frequency, from the starting chopped strand to the end pellet.

22. The method as claimed in one of the preceding claims, **characterized in that** the stirring is performed in a cylinder having the shape of a plate, with a diameter larger than its depth, said plate being equipped with partitions parallel to the axis of rotation and increasing the residence time of the pellets.

23. The method as claimed in the preceding claim, **characterized in that** the stirring apparatus receives the chopped strands at the center and **in that** the pellets re-emerge via the periphery of the plate.

24. The method as claimed in one of claims 1 to 21, **characterized in that** the equipment has just one stirring zone.

25. A pellet with a diameter of between 1 and 10 mm, comprising, in close contact, 50 000 to 500 000 parallel glass filaments with individual diameters ranging from 5 to 24 µm.

26. The pellet as claimed in the preceding claim comprising 360 000 to 500 000 glass filaments.

27. The use of pellets as claimed in one of the claims 25 or 26 to reinforce a thermoplastic.

28. The use as claimed in the preceding claim, **characterized in that** the pellet is not encapsulated in a polymer.

## Patentansprüche

1. Verfahren zur Herstellung von Glasfadengranulat durch Umrühren von mit einer Schlichte überzogenen Kurzglasfäden, die aneinander anliegende Glasfilamente umfassen, in Gegenwart von 10 bis 25 Gew.-% Wasser, wobei die Fäden mit einer Schlichte überzogen worden sind, die ein Organosilan umfasst, das Verfahren ein Umrühren einen Zeitraum lang sicherstellt, der für eine Dichteerhöhung um mindestens 67 % ausreicht, von einer einzigen Rührvorrichtung zu jedem Zeitpunkt dieselbe Rührgeschwindigkeit für die Fäden oder das sich bildende Granulat, die (das) sie enthält, sichergestellt wird und das am Ende gebildete Granulat nach der Trocknung mindestens 95 Gew.-% Glas enthält, wobei spätestens während des Rührvorgangs ein Filmbildner mit den Glasfäden in Berührung kommt.

2. Verfahren nach dem vorhergehenden Anspruch, **dadurch gekennzeichnet, dass** das Umrühren ein Verwirbeln ist.

3. Verfahren nach dem vorhergehenden Anspruch, **dadurch gekennzeichnet, dass** die Vorrichtung die Fäden oder das sich bildende Granulat, die (das) sie enthält, mit einer linearen Geschwindigkeit von 0,2 bis 1 Meter pro Sekunde bewegt.

4. Verfahren nach dem vorhergehenden Anspruch, **dadurch gekennzeichnet, dass** die Vorrichtung die Fäden oder das sich bildende Granulat, die (das) sie enthält, mit einer linearen Geschwindigkeit von 0,3 bis 0,7 Meter pro Sekunde bewegt.

5. Verfahren nach dem vorhergehenden Anspruch, **dadurch gekennzeichnet, dass** die Vorrichtung die Fäden oder das sich bildende Granulat, die (das) sie enthält, mit einer linearen Geschwindigkeit von etwa 0,5 Meter pro Sekunde bewegt.

6. Verfahren nach einem der Ansprüche 2 bis 5, **dadurch gekennzeichnet, dass** das Verwirbeln vom Schlagen mit einem Hammer auf die Verwirbelungsvorrichtung unterstützt wird.

7. Verfahren nach einem der vorhergehenden Ansprüche, **dadurch gekennzeichnet, dass** der gesamte Filmbildner auf die Fäden während des Beschichtens mit der Schlichte aufgebracht wird.

8. Verfahren nach einem der vorhergehenden Ansprüche, **dadurch gekennzeichnet, dass** der Filmbildner mit einem Anteil von 0,3 bis 2 Gew.-% der gesamten umzurührenden Masse vorhanden ist.

9. Verfahren nach einem der vorhergehenden Ansprüche, **dadurch gekennzeichnet, dass** das gesamte zugeführte Wasser vollständig von den Kurzfäden beigetragen wird.

10. Verfahren nach einem der Ansprüche 1 bis 8, **dadurch gekennzeichnet, dass** das Wasser der Rührvorrichtung teilweise von den Fäden und teilweise direkt der Vorrichtung unabhängig von den Fäden zugeführt wird.

11. Verfahren nach dem vorhergehenden Anspruch, **dadurch gekennzeichnet, dass** das von den Fäden beigetragene Wasser 5 bis 15 Gew.-% der umzurührenden Masse ausmacht und das direkt der Vorrichtung zugeführte Wasser 5 bis 10 Gew.-% der umzurührenden Masse ausmacht.

12. Verfahren nach einem der zwei vorhergehenden Ansprüche, **dadurch gekennzeichnet, dass** das direkt zugeführte Wasser versprüht oder zerstäubt vorliegt.

13. Verfahren nach einem der vorhergehenden Ansprüche, **dadurch gekennzeichnet, dass** die Länge der Fäden 1,5 bis 15 mm beträgt.

14. Verfahren nach einem der vorhergehenden Ansprüche, **dadurch gekennzeichnet, dass** die Kurzfäden weniger als 200 gewichtsbezogene ppm 1 bis 10 Filamente umfassendes Feingut enthalten.

15. Verfahren nach einem der vorhergehenden Ansprüche, **dadurch gekennzeichnet, dass** der Rührvorgang einen Zeitraum lang durchgeführt wird, der für eine Dichteerhöhung um mindestens 80 % ausreicht.

16. Verfahren nach dem vorhergehenden Anspruch, **dadurch gekennzeichnet, dass** der Rührvorgang einen Zeitraum lang durchgeführt wird, der für eine Dichteerhöhung um mindestens 100 % ausreicht.

17. Verfahren nach dem vorhergehenden Anspruch, **dadurch gekennzeichnet, dass** der Rührvorgang einen Zeitraum lang durchgeführt wird, der für eine Dichteerhöhung um mindestens 130 % ausreicht.

18. Verfahren nach dem vorhergehenden Anspruch, **dadurch gekennzeichnet, dass** der Rührvorgang einen Zeitraum lang durchgeführt wird, der für eine Dichteerhöhung um mindestens 200 % ausreicht.

19. Verfahren nach einem der vorhergehenden Ansprüche, **dadurch gekennzeichnet, dass** der Glühverlust des Granulats weniger als 0,5 % beträgt.

20. Verfahren nach einem der vorhergehenden Ansprüche, **dadurch gekennzeichnet, dass** die Innenfläche der Rührvorrichtung mit einer hydrophoben polymeren Beschichtung überzogen ist.

21. Verfahren nach einem der vorhergehenden Ansprüche, **dadurch gekennzeichnet, dass** der Herstellungsvorgang kontinuierlich und der Rührvorgang mit einer konstanten Geschwindigkeit vom Ausgangskurzfaden bis zum fertigen Granulat durchgeführt wird.

22. Verfahren nach einem der vorhergehenden Ansprüche, **dadurch gekennzeichnet, dass** der Rührvorgang in einem Zylinder mit der Form eines Tellers, dessen Durchmesser größer als seine Höhe ist, durchgeführt wird, wobei der Teller mit Zwischenwänden ausgestattet ist, die parallel zur Drehachse stehen und die Verweilzeit des Granulats verlängern.

23. Verfahren nach dem vorhergehenden Anspruch, **dadurch gekennzeichnet, dass** die Rührvorrichtung die Kurzfäden in der Mitte aufnimmt, **und dass** das Granulat sie am Umfang des Tellers verlässt.

24. Verfahren nach einem der Ansprüche 1 bis 21, **dadurch gekennzeichnet, dass** die Vorrichtung nur einen einzigen Rührbereich enthält.

25. Korn mit einem Durchmesser von 1 bis 10 mm, das im innigen Kontakt miteinander 50 000 bis 500 000 parallele Glasfilamente mit einem Einzeldurchmesser von 5 bis 24 µm umfasst.

26. Korn nach dem vorhergehenden Anspruch, das 360 000 bis 500 000 Glasfilamente umfasst.

27. Verwendung der Körner nach Anspruch 25 oder 26 zur Verstärkung eines Thermoplasts.

28. Verwendung nach dem vorhergehenden Anspruch, **dadurch gekennzeichnet, dass** das Korn nicht mit einem Polymer umkapselt ist.
